# FASCICULE DE BREVET EUROPEEN

(11) **EP 3 456 073 B1**
(45) Date de publication et mention de la délivrance du brevet: **15.01.2025**
(21) Numéro de dépôt: 17727635.9
(22) Date de dépôt: 05.05.2017
(51) Int. Cl.: H04L 9/40, H04W 12/37, H04W 12/48, H04W 12/086, H04W 8/18, H04W 12/04, H04W 12/30

(54) **PROCÉDÉ ET DISPOSITIF D'INSTALLATION SOUS DOUBLE CONTRÔLE D'UNE RÈGLE DE CONFIGURATION D'UNE CARTE SIM EMBARQUÉE**
VERFAHREN UND VORRICHTUNG ZUR RICHTLINIENINSTALLATION MIT DOPPELCONTROL IN EINER EINGEBETETEN SIM-KARTE
METHOD AND APPARATUS FOR POLICY CONTROL FUNCTIONS INSTALLATION UNDER THE CONTROL OF TWO ENTITIES IN AN EMBEDDED SIM CARD

(30) Priorité: 09.05.2016 FR 1654140
(43) Date de publication de la demande: 20.03.2019
(73) Titulaire: Orange, 92130 Issy-les-Moulineaux (FR)
(72) Inventeur: COUREAU, Laurent, 91420 MORANGIS (FR); GHAROUT, Saïd, 75019 PARIS (FR)
(86) Numéro de dépôt international: PCT/FR2017/051091
(87) Numéro de publication internationale: WO 2017/194864

(56) Documents cités:
- EP-A2- 2 854 432
- US-A1- 2015 281 964
- "Global Platform Card Specification Version 2.2", 31 March 2006 (2006-03-31), XP055090891, Retrieved from the Internet <URL:http://www.win.tue.nl/pinpasjc/docs/GPCardSpec_v2.2.pdf> [retrieved on 20131129]
- "Smart Cards; Embedded UICC; Requirements Specification (Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP REQ, no. V13.1.0, 1 February 2016 (2016-02-01), XP014274101

## Description

### 1. Domaine de l'invention

La demande d'invention se situe dans le domaine des terminaux de communication mobile, et plus particulièrement des cartes SIM dites embarquées (eUICC, ou eSIM). Une carte SIM embarquée permet à un terminal mobile de fonctionner avec des abonnements auprès de plusieurs opérateurs avec une seule et même carte SIM généralement non amovible.

### 2. Etat de la technique antérieure

On appelle un profil opérateur un ensemble de fichiers installés au sein de la carte eSIM. Cet ensemble de fichiers a pour rôle, s'il est activé, d'assurer l'exécution d'un environnement de fonctionnement du terminal tout en restant sous le contrôle de l'opérateur associé au profil. C'est le même environnement que celui que fournirait une carte SIM classique, mono-opérateur, fournie par cet opérateur.

A chaque profil opérateur est associé un ensemble de règles (Policy Rules en anglais) destinées à gérer le cycle de vie du profil opérateur. Des exemples de règles sont:
- interdiction de désactivation du profil opérateur ;
- interdiction de suppression du profil opérateur ;
- en cas de désactivation, alors suppression du profil opérateur.

Par analogie, dans l'environnement fourni par une carte SIM classique mono-opérateur, il existe la règle dite "SIM lock" que l'opérateur peut choisir d'appliquer afin d'empêcher le fonctionnement du terminal avec une carte SIM d'un opérateur différent. On comprend que le module SIM lock doit être intégré au terminal et non à la carte SIM. Par contre, comme une carte eSIM n'est pas destinée à être remplacée ou retirée du terminal par l'utilisateur, particulièrement lorsqu'elle est soudée, les règles peuvent être stockées dans la carte eSIM, avec les profils opérateur.

Lorsque l'utilisateur du terminal embarquant une carte eSIM souhaite effectuer une action sur un de ses profils opérateur, par exemple le désactiver pendant une période déterminée afin d'éviter une facturation excessive de la part de l'opérateur associé, un mécanisme de contrôle appelé Policy Enforcement vérifie si une telle action est autorisée, c'est-à-dire si elle n'est pas contraire aux règles (Policy Rules) gouvernant ce profil opérateur. C'est généralement au moment où l'utilisateur souscrit à un abonnement auprès d'un opérateur que sont installés le ou les profils et les règles associés, en fonction des termes du contrat entre l'opérateur et l'utilisateur (ou entre l'opérateur et l'abonné si l'abonné n'est pas l'utilisateur). Ni le fabricant du terminal, ni le fabricant de la carte eSIM ne sont impliqués directement dans cette installation des profils et des règles permettant de modifier les profils. Comme seul l'opérateur peut exercer un contrôle sur les profils et sur les règles, comme cela est vérifié dans le cadre des produits avec carte eSIM répondant aux spécifications M2M (machine à machine) définies à la GSMA (association GSM), cela ne permet pas, par exemple, aux fabricants de vérifier le respect de leurs accords commerciaux avec les opérateurs, ou le respect de réglementations locales lorsque la responsabilité du fabricant est engagée.

Un des buts de l'invention est de remédier à ces inconvénients de l'état de la technique. US 2015/281964 A1 (SEO MYOUNG HEE [KR] ET AL) 1 octobre 2015 (2015-10-01) et EP 2 854 432 A2 (KT CORP [KR]) 1 avril 2015 (2015-04-01) présentent des solutions de gestion des profiles dans des eSIM, en particulier l'installation de profiles incluant leurs attributs, et les règles d'utilisation par différents acteurs qui sont authentifiés et établissent un canal de communication sécurisé.

"Global Platform Card Specification Version 2.2",, 31 mars 2006 (2006-03-31), XP055090891 et "Smart Cards; Embedded UICC; Requirements Specification (Release 13)",TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP REQ, no. V13.1.0, 1 février 2016 (2016-02-01), XP014274101, sont les standards applicables.

### 3. Exposé de l'invention

L'invention est définie par les revendications indépendantes. Les revendications dépendantes constituent des exemples d'implémentation.

L'invention vient améliorer la situation à l'aide d'un procédé d'installation d'une règle d'exécution d'un environnement de fonctionnement pour un terminal de communication dans un réseau mobile d'un opérateur, le dit environnement étant appelé profil opérateur, le profil opérateur étant mémorisé dans un module d'abonné embarqué dans le terminal, le procédé comprenant les étapes suivantes mises en œuvre par le module d'abonné :
- obtention d'un premier jeton signé par l'opérateur et comprenant une information relative à l'identification de la règle ;
- obtention d'un second jeton signé par un tiers autre que l'opérateur et comprenant un premier moyen de vérification de l'authenticité du premier jeton ;
- vérification de l'authenticité du premier jeton à l'aide du premier moyen de vérification ;
- vérification de l'authenticité du second jeton à l'aide d'un second moyen de vérification ;
- installation de la règle dans le module d'abonné si les authenticités des premier et second jetons sont vérifiées.

Grâce aux jetons, une règle (Policy Rule) n'est installée dans le module abonné, c'est-à-dire dans la carte SIM ou eSIM, que si l'installation est autorisée à la fois par l'opérateur et par une entité tierce telle autre que l'opérateur, et pas uniquement autorisée par l'opérateur associé au profil comme c'est le cas dans la technique antérieure. Le contrôle de l'installation de la règle, grâce à la vérification de l'authenticité des jetons, peut donc être assuré conjointement par l'opérateur et par le tiers, qui auront préalablement passé un accord afin de produire les jetons authentifiables nécessaires. La règle fait partie d'une liste de règles connues du module d'abonné. L'identifiant de la règle permet au module d'abonné de trouver la règle dans la liste et de l'installer.

Les jetons (Token en anglais) sont des fichiers numériques transmis au module d'abonné du terminal à l'initiative de l'opérateur, par exemple au moment de l'installation du profil. Les jetons peuvent être émis par une entité de l'opérateur chargée de la préparation des données de gestion de l'abonnement, appelée SMDP ("Subscription Manager Data Preparation" en anglais), et/ou par une plateforme de l'opérateur dite OTA (par ondes radio, "over the air" en anglais) si par exemple l'installation du profil et des règles sont décorrélées dans le temps.

Ainsi, la règle est installée et prête à être utilisée en anticipation d'une action de l'utilisateur sur le profil. Ainsi, si, par exemple, les profils de deux opérateurs différents sont installés sur la carte eSIM du terminal, le profil actif étant celui correspondant à un abonnement professionnel, le profil inactif correspondant à un abonnement privé, l'utilisateur peut basculer de son abonnement professionnel à son abonnement privé à la fin de sa journée de travail, sans nécessiter le moindre échange de messages entre son terminal et chacun des opérateurs pour obtenir des autorisations pour la désactivation du premier profil et l'activation du second profil. Le terminal se base uniquement sur les règles installées grâce au procédé selon l'invention, qui suffisent à déterminer et autoriser toutes les actions possibles sur les profils installés.

Il est à noter que dans ce document, le terme "installation" ou "installer" appliqué à une règle prend le sens donné en anglais par le terme "set up". L'installation d'une règle peut par exemple simplement être son activation, sachant que les règles, ou "Policy Rules", font partie d'une liste connue entre opérateurs et fabricants de terminaux et de carte SIM, et éventuellement standardisée, où elles sont identifiables par un identifiant alphanumérique. Cette liste peut par exemple être chargée dans une mémoire du terminal ou de la carte d'abonné.

Selon un aspect de l'invention, le second moyen de vérification est installé par le tiers, préalablement à l'étape d'obtention des jetons.

Grâce à cet aspect, le tiers contrôle le moyen permettant de vérifier l'authenticité du jeton censé être signé par l'opérateur. Ainsi, le contrôle de l'installation de la règle est double, par l'opérateur au travers du premier jeton, et par le tiers au travers de la vérification de l'authenticité du premier jeton.

Ceci permet une plus grande sécurité contre une falsification éventuelle des jetons, ainsi qu'une plus grande flexibilité dans la mise en place des règles. Le jeton associé au tiers peut en effet être obtenu préalablement lors de la conclusion d'un contrat entre l'opérateur et le tiers, qui peut s'appliquer soit globalement sur un ensemble de terminaux, soit sur des terminaux identifiés individuellement.

Selon un aspect de l'invention, le tiers autre que l'opérateur est un fabricant du terminal.

Grâce à cet aspect, le contrôle de la règle peut être effectué conjointement par l'opérateur et par le fabricant du terminal. Il est aisé pour le fabricant d'installer "en usine" le second moyen de vérification directement dans le module d'abonné.

Selon un aspect de l'invention, le tiers autre que l'opérateur est un fabricant du module d'abonné du terminal.

Grâce à cet aspect, le contrôle de la règle peut être effectué conjointement par l'opérateur et par le fabricant du module d'abonné du terminal, ce dernier pouvant être différent du fabricant du terminal. Il est aussi aisé pour le fabricant du module d'abonné d'installer "en usine" le second moyen de vérification directement dans le module d'abonné avant sa livraison au fabricant, ou à un opérateur si c'est celui-ci qui installe le module d'abonné dans le terminal.

Selon un aspect de l'invention, les jetons sont émis par l'opérateur.

Du lien contractuel unissant l'opérateur et l'abonné découle un lien électronique entre le réseau de l'opérateur et le terminal de l'abonné. La transmission des jetons (Token en anglais) par l'opérateur est plus aisée que par un tiers sans lien contractuel avec l'abonné. Pour garantir le contrôle conjoint, il suffit qu'un lien contractuel existe entre l'opérateur et le tiers, avant l'émission des jetons.

Ces jetons, qui sont des fichiers numériques, peuvent être émis vers le module d'abonné du terminal, simultanément ou non, par une entité de l'opérateur chargée de la préparation des données de gestion de l'abonnement, appelée SMDP ("Subscription Manager Data Preparation" en anglais), et/ou par une plateforme de l'opérateur dite OTA (par ondes radio, "over the air" en anglais) si par exemple l'installation du profil et des règles sont décorrélées dans le temps.

Selon un aspect de l'invention, au moins un jeton comprend en outre des informations relatives à des limites dans l'application de la règle au profil opérateur.

Grâce à cet aspect, l'opérateur ou le fabricant, par exemple, peuvent contrôler plus finement la règle, par exemple en ne permettant son utilisation avec le profil que pendant une période de temps déterminée, ou qu'en association avec un autre opérateur partenaire, s'il s'agit de basculer d'un profil à un autre. Ceci permet par exemple d'éviter qu'un des deux acteurs (l'opérateur ou le fabricant) puisse modifier ou ajouter une règle au-delà de la durée des accords entre opérateur et fabricant.

Selon un aspect de l'invention, le premier moyen de vérification est un condensé résultant d'une fonction de hashage appliquée sur une clé correspondant à l'opérateur.

Grâce à cet aspect, le premier moyen de vérification est de taille réduite dans le second jeton, et est simple à mettre en œuvre dans le module d'abonné.

Les différents aspects du procédé d'installation d'un règle qui viennent d'être décrits peuvent être mis en œuvre indépendamment les uns des autres ou en combinaison les uns avec les autres.

L'invention concerne aussi un dispositif d'installation d'une règle d'exécution d'un environnement de fonctionnement pour un terminal de communication dans un réseau mobile d'un opérateur, le dit environnement étant appelé profil opérateur, le profil opérateur étant mémorisé dans un module d'abonné embarqué dans le terminal, le dispositif comprenant les modules suivants :
- module d'obtention de deux jetons, un premier jeton étant signé par l'opérateur et comprenant une information relative à l'identification de la règle, un second jeton étant signé par un tiers autre que l'opérateur et comprenant un premier moyen de vérification de l'authenticité du premier jeton ;
- module de vérification de l'authenticité du premier jeton à l'aide du premier moyen de vérification, et de l'authenticité du second jeton à l'aide d'un second moyen de vérification ;
- module d'installation de la règle dans le module d'abonné si les authenticités des premier et second jetons sont vérifiées.

Ce dispositif, apte à mettre en œuvre dans tous ses modes de réalisation le procédé d'installation d'une règle qui vient d'être décrit, peut par exemple être compris dans un module d'abonné tel qu'une carte eSIM, avec des modules ISD-R et Policy Enforcement (polEnf) qui sont modifiés par rapport aux normes GSMA.

L'invention concerne également un module d'abonné d'un terminal de communication dans un réseau mobile d'un opérateur comprenant au moins un module de profil opérateur et un dispositif tel que celui qui vient d'être décrit.

Ce module d'abonné peut par exemple être une carte eSIM modifiée par rapport aux normes GSMA.

L'invention concerne de plus un terminal de communication dans un réseau mobile d'un opérateur comprenant module d'abonné tel que celui qui vient d'être décrit.

L'invention concerne enfin un programme d'ordinateur comprenant des instructions pour la mise en œuvre des étapes du procédé d'installation d'une règle qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un terminal mobile, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente un exemple de mise en œuvre du procédé d'installation d'une règle, selon un aspect de l'invention,
- la figure 2 présente un exemple de structure d'un dispositif mettant en œuvre le procédé d'installation d'une règle, selon un aspect de l'invention.

### 5. Description détaillée d'au moins un mode de réalisation de l'invention

Dans la suite de la description, on présente des exemples de plusieurs modes de réalisation de l'invention s'appliquant à une carte eSIM telle qu'en cours de normalisation dans le cadre de l'association GSMA, mais l'invention s'applique également à d'autres types de module d'abonné.

Aussi, l'invention est illustrée à l'aide d'un exemple qui est la désactivation d'un profil activé, mais l'invention s'applique à d'autres exemples, comme l'activation d'un profil désactivé, la suppression d'un profil activé ou non, etc.

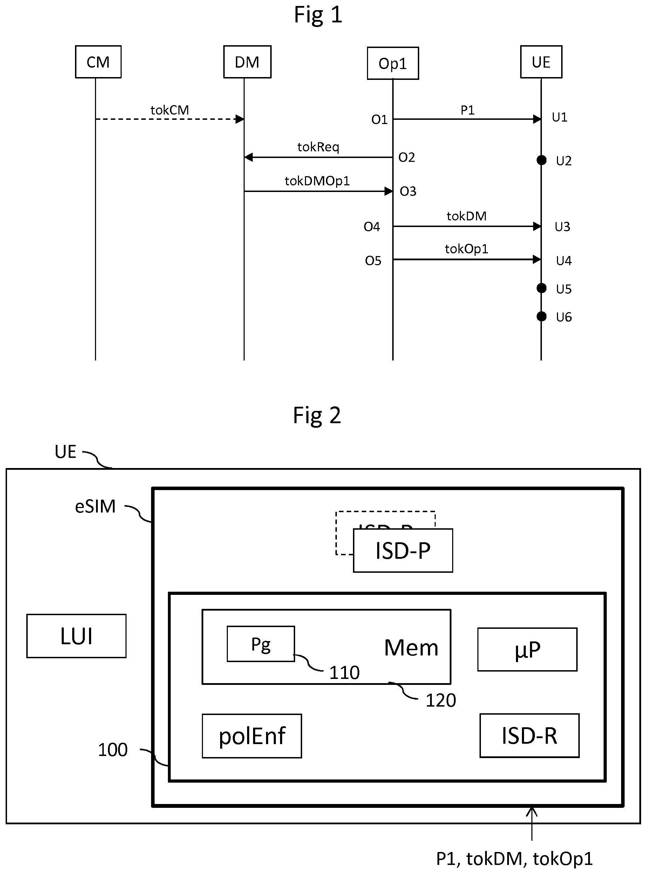

La **figure 1** présente un exemple de mise en œuvre du procédé d'installation d'une règle, selon un aspect de l'invention.

Lors d'une étape U1, un terminal mobile d'utilisateur UE reçoit un environnement P1 de fonctionnement dans un réseau mobile d'un opérateur Op1. Cet environnement de fonctionnement, appelé profil, est un ensemble de données et d'applications à installer sur un module d'abonné et permettant la fourniture de services par un opérateur de réseau mobile dans le cadre d'un contrat d'abonnement entre cet opérateur et le propriétaire du terminal mobile. Le module d'abonné est par exemple une carte eSIM, dont la particularité est de permettre l'installation de profils de plusieurs opérateurs différents.

Lors d'une étape U2, le profil P1 est installé par le terminal UE, c'est-à-dire mémorisé dans un compartiment spécial de la carte eSIM, par exemple le module appelé ISD-P (Issuer Security Domain - Profile) et chargé d'instancier, dans la carte eSIM, une représentation de l'opérateur, par exemple un équipement de l'opérateur chargé de la préparation des données de gestion de l'abonnement, appelé SMDP.

Les étapes U1 et U2 sont préalables aux étapes suivantes, et peuvent prendre différentes formes, ou être combinées, le résultat principal étant d'une part, la mémorisation du profil P1 dans la carte eSIM du terminal UE, et d'autre part, l'activation du profil P1.

Lors d'une étape U3, suite à, ou en anticipation de, un souhait ou une requête de l'utilisateur de désactiver le profil P1, le terminal UE reçoit de la part de l'opérateur Op1 un jeton tokDM, dit "jeton fabricant". Un fabricant de terminal ou de carte SIM n'ayant en général pas de relation directe avec l'utilisateur, ni de lien de communication avec son terminal UE, le jeton tokDM est transmis au terminal UE par l'opérateur Op1, par exemple par l'équipement SMDP. La façon dont l'opérateur Op1 a généré ou obtenu le jeton tokDM est décrite plus bas (étapes O2 à O4).

Lors d'une étape U4, suite à, ou en anticipation de, un souhait ou une requête de l'utilisateur de désactiver le profil P1, le terminal UE reçoit de la part de l'opérateur Op1 un jeton tokOp1, dit "jeton opérateur".

L'ordre d'obtention des jetons par le terminal est sans importance, et les étapes U3 et U4 peuvent donc être inversées dans le temps.

Les jetons tokDM et tokOp1 peuvent prendre la forme d'un message comprenant un fichier.

Le jeton opérateur tokOp1 comprend une signature de l'opérateur Op1, un identifiant d'au moins une règle R1 applicable au profil P1, et optionnellement un identifiant du profil P1 (mais pas obligatoirement car une vérification de la signature permet normalement d'identifier P1). Eventuellement, le jeton opérateur tokOp1 peut comprendre un ou plusieurs autres champs précisant des conditions restreignant l'application de la règle. Des exemples de telles conditions sont: durée de vie de la règle, opérateur partenaire associé, etc.

La règle R1 fait partie d'un ensemble de règles déterminées et connues du terminal, par exemple par le biais d'une bibliothèque de règles préalablement mémorisées dans la carte eSIM.

Le jeton fabricant tokDM comprend une signature du fabricant DM du terminal UE, ainsi qu'un moyen de vérifier l'authenticité du jeton opérateur.

Le moyen de vérifier l'authenticité du jeton fabricant est existant dans le terminal, de préférence préalablement à l'installation du profil Op1. Ce moyen de vérification de l'authenticité du jeton fabricant tokDM peut par exemple être un mécanisme à clés publique et privée préinstallé "à l'usine" par le fabricant DM dans un module de la carte eSIM du terminal UE. Avantageusement, ce module de vérification peut être le module polEnf de la carte eSIM, dit module "Policy Enforcement" (application de la politique). Ce module, en effet, est un composant neutre dans la carte eSIM, par rapport à tous les opérateurs susceptibles d'y installer un profil qui leur est associé.

Le moyen de vérifier l'authenticité du jeton opérateur tokOp1 est, quant à lui, compris dans le jeton fabricant. Par exemple ce moyen peut être une clé publique de l'opérateur Op1, un certificat de l'opérateur Op1, ou un "hash" de la clé publique de l'opérateur Op1. Avantageusement, le module de vérification de l'authenticité du jeton opérateur tokOp1 peut aussi être le module polEnf de la carte eSIM.

Lors d'une étape U5, l'authenticité des jetons est vérifiée, par exemple par le module polEnf de la carte eSIM du terminal UE.

L'authenticité du jeton tokOp1 est effectuée à l'aide du moyen de vérification compris dans le jeton tokDM. Par exemple, dans une mise en œuvre d'un mécanisme de vérification d'authenticité facile à mettre en œuvre, le jeton tokOp1 est signé en utilisant une clé symétrique calculée par l'opérateur Op1, selon un mécanisme connu sous le nom de MAC ou HMAC. Cette clé est communiquée par l'opérateur au module polEnf au moment de l'installation ou de l'activation du profil P1. Enfin, la fonction hash à utiliser pour la clé (par exemple SHA256) est communiquée au module polEnf d'une manière similaire, et le condensé résultant de l'application de la fonction hash sur cette clé est communiqué au fabricant DM, dans le cadre d'un accord conclu entre l'opérateur et le fabricant. Le jeton tokDM comprend le condensé, c'est-à-dire le moyen de vérification, qui permettra au module polEnf de vérifier l'authenticité du jeton tokOp1 en comparant le condensé compris dans le jeton tokDM avec le condensé obtenu par l'application de la fonction hash sur la clé utilisée pour signer le jeton tokOp1, cette clé ayant été communiqué préalablement par l'opérateur au module polEnf.

L'authenticité du jeton tokDM, quant à elle, peut par exemple être vérifiée à l'aide d'une signature par clé privée associée à une clé publique connue par le module polEnf comme étant celle du fabricant DM.

Si l'authenticité des deux jetons est bien vérifiée, cela signifie que la règle identifiée dans le jeton tokOp1 concerne bien l'opérateur identifié dans le jeton tokDM, c'est-à-dire qu'il existe bien une correspondance entre les deux jetons.

Lors d'une étape U6, la règle R1 est installée, par exemple par le module polEnf, et prête à être utilisée.

Lors d'une étape non illustrée, subséquente à l'installation de la règle R1, la règle est utilisée. Par exemple le terminal UE effectue, tel que requis par l'utilisateur, la désactivation du profil P1, si cette modification est autorisée par la règle R1. Ainsi, grâce au procédé d'installation selon l'invention, la modification n'est possible que si elle est conjointement autorisée par l'opérateur Op1 et par le fabricant DM.

Si la règle R1 est, par exemple, qu'un profil de l'opérateur Op1 sur un terminal fabriqué par DM ne peut être désactivé que s'il est supprimé complètement, alors le terminal UE effectue, de plus, la suppression du profil P1.

L'invention concerne en outre un procédé de transmission, par un opérateur, d'un jeton signé par le fabricant d'un terminal mobile. Ce procédé est également illustré par la figure 1.

Lors d'une étape O1, l'équipement SMDP de l'opérateur Op1 émet vers le terminal UE le profil P1.

Lors d'une étape O2, un équipement de l'opérateur Op1, par exemple l'équipement SMDP, émet une requête de jeton vers un équipement du fabricant DM ayant fabriqué le terminal UE. La requête comprend au moins un identifiant de l'opérateur Op1, et peut comprendre un ou plusieurs identifiants de règles, et un ou plusieurs identifiants de profils.

Lors d'une étape O3, l'équipement de l'opérateur Op1 reçoit en réponse un jeton tokDMOp1. Ce jeton peut être fonction du type de contrôle autorisé et délégué par le fabricant DM à l'opérateur Op1. Le jeton peut comprendre, en plus d'une ou plusieurs règles applicables au profil, des conditions restreignant leur application. Optionnellement, le jeton tokDMOp1 généré par le fabricant DM peut lui-même être basé sur un jeton tokCM généré par le fabricant CM de la carte eSIM, en utilisant un mécanisme de clés publique et privée par exemple.

Il est à noter que l'étape O1, qui est la fourniture du profil au terminal, peut avoir lieu après l'étape O3, auquel cas la fourniture du jeton du fabricant à l'opérateur anticipe une action subséquente sur le profil de la part de l'utilisateur.

Lors d'une étape O4, l'équipement SMDP de l'opérateur Op1 émet un jeton tokDM qui est basé sur le jeton tokDMOp1. Si la requête de jeton est spécifique à une règle et à un profil, le jeton tokDM peut être le même que le jeton tokDMOP1, mais dans le cas général, la requête de jeton, ainsi que la réponse, concerne un ensemble de règles et un ensemble de profils.

Lors d'une étape O5 l'équipement SMDP de l'opérateur Op1 émet, en plus du jeton tokDM, un jeton tokOp1 qui est spécifique à une règle et à un profil.

En relation avec la **figure 2****,** on présente maintenant un exemple de structure d'un dispositif mettant en œuvre le procédé d'installation d'une règle, dont différents modes de réalisation viennent d'être décrits.

Un tel dispositif 100 peut être mis en œuvre dans le module d'abonné du terminal UE. Ce module d'abonné peut être une carte eSIM, embarquée ou non de manière fixe dans le terminal, par exemple soudée.

Par exemple, le dispositif 100 est équipée d'un microprocesseur µP, et est pilotée par un programme d'ordinateur 110, stocké dans une mémoire 120 et mettant en œuvre le procédé d'installation d'une règle selon l'invention. A l'initialisation, les instructions de code du programme d'ordinateur 110 sont par exemple chargées dans une mémoire RAM, avant d'être exécutées par le processeur de la carte eSIM.

Un tel dispositif 100 comprend les modules matériels ou logiciels suivants :
- un module ISD-R, apte à obtenir des jetons tokOp1 et tokDM signés respectivement par un opérateur et par un tiers, et à recevoir un ou des profils opérateur P1 et à en gérer l'installation dans un module ISD-P de la carte eSIM ;
- un module polEnf, apte à vérifier l'authenticité des jetons tokDM et tokOp1, et à installer dans la carte eSIM une règle comprise dans un des jetons signés.

La carte eSIM comprend également un ou plusieurs modules ISD-P, chaque module ISD-P étant apte à héberger le profil d'un opérateur pour l'abonné du terminal, et à agir en tant que représentant de cet opérateur sur le terminal.

Avantageusement, le module polEnf peut mettre à jour, pour chacun des profils hébergés, une liste de règles installées.

La carte eSIM elle-même est comprise dans un terminal UE qui comprend en outre un module LUI (Local User Interface, ou interface locale d'utilisateur) permettant à l'utilisateur d'agir sur le ou les profils opérateurs installés sur la carte eSIM dans le ou les modules ISD-P, par l'intermédiaire du module ISD-R, tout en respect de la ou des règles installées grâce au procédé d'installation selon l'invention.

Cette figure 2 illustre seulement une manière particulière, parmi plusieurs possibles, de réaliser l'algorithme détaillé ci-dessus, en relation avec la figure 1. En effet, la technique de l'invention se réalise indifféremment sur une carte eSIM reprogrammable (un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les exemples de réalisation de l'invention qui viennent d'être présentés ne sont que quelques-uns des modes de réalisation envisageables. Ils montrent que l'invention permet un contrôle conjoint par un opérateur et par un tiers, par exemple le fabricant du terminal ou le fabricant de la carte eSIM, de toute action de l'utilisateur d'un terminal sur un profil opérateur qui est installé ou à installer, et ceci même si la carte eSIM héberge des profils de plusieurs opérateurs à la fois.

## Revendications

1. **Procédé** d'installation d'une règle d'exécution d'un environnement de fonctionnement pour un terminal (UE) de communication dans un réseau mobile d'un opérateur (Op1), le dit environnement (P1) étant appelé profil opérateur, le profil opérateur étant mémorisé dans un module d'abonné (eSIM) embarqué dans le terminal, le procédé comprenant les étapes suivantes mises en œuvre par le module d'abonné :
• obtention (U4) d'un premier jeton (tokOp1) en provenance de l'opérateur, le premier jeton comprenant une information relative à l'identification de la règle et une signature de l'opérateur;
• obtention (U3) d'un second jeton (tokDM) en provenance de l'opérateur, le second jeton comprenant un premier moyen de vérification de l'authenticité du premier jeton et une signature d'un tiers (DM ;CM) autre que l'opérateur;
• vérification (U5) de l'authenticité du premier jeton à l'aide du premier moyen de vérification ;
• vérification (U5) de l'authenticité du second jeton à l'aide d'un second moyen de vérification préinstallé dans le module d'abonné par le tiers ;
• installation (U6) de la règle dans le module d'abonné si les authenticités des premier et second jetons sont vérifiées.

2. **Procédé** selon la revendication 1, où le second moyen de vérification est installé par le tiers (DM ; CM), préalablement à au moins une des étapes (U3 ; U4) d'obtention des jetons (tokDM ; tokOp1).

3. **Procédé** selon l'une des revendications 1 ou 2, où le tiers autre que l'opérateur (Op1) est un fabricant (DM) du terminal (UE).

4. **Procédé** selon l'une des revendications 1 ou 2, où le tiers autre que l'opérateur (Op1) est un fabricant (CM) du module d'abonné (eSIM) du terminal (UE).

5. **Procédé** selon l'une des revendications précédentes, où au moins un jeton (tokDM ; tokOp1) comprend en outre des informations relatives à des limites dans l'application de la règle au profil opérateur (P1).

6. **Procédé** selon l'une des revendications précédentes, où le premier moyen de vérification est un condensé résultant d'une fonction de hashage appliquée sur une clé correspondant à l'opérateur (Op1).

7. **Dispositif** d'installation d'une règle d'exécution d'un environnement de fonctionnement pour un terminal (UE) de communication dans un réseau mobile d'un opérateur (Op1), le dit environnement (P1) étant appelé profil opérateur, le profil opérateur étant mémorisé dans un module d'abonné (eSIM) embarqué dans le terminal, le dispositif comprenant les modules suivants :
• module d'obtention (ISD-R) de deux jetons en provenance de l'opérateur, un premier jeton (tokOp1) comprenant une information relative à l'identification de la règle et une signature de l'opérateur, un second jeton (tokDM) comprenant un premier moyen de vérification de l'authenticité du premier jeton et une signature d'un tiers (DM ;CM) autre que l'opérateur ;
• module de vérification (polEnf) de l'authenticité du premier jeton à l'aide du premier moyen de vérification, et de l'authenticité du second jeton à l'aide d'un second moyen de vérification préinstallé dans le module d'abonné par le tiers ;
• module d'installation (polEnf) de la règle dans le module d'abonné si les authenticités des premier et second jetons sont vérifiées.

8. **Module d'abonné** d'un terminal (UE) de communication dans un réseau mobile d'un opérateur (Op1) comprenant au moins un module de profil opérateur (ISD-P) et un dispositif conforme à la revendication 7.

9. **Terminal** (UE) de communication dans un réseau mobile d'un opérateur (Op1) comprenant module d'abonné (eSIM) conforme à la revendication 8.

10. **Programme d'ordinateur, caractérisé en ce qu'**il comprend des instructions pour la mise en œuvre des étapes du procédé d'installation d'une règle selon la revendication 1, lorsque ce programme est exécuté par un processeur.

11. **Support d'enregistrement** lisible par un module d'abonné sur lequel est enregistré le programme selon la revendication 10.

## Patentansprüche

1. Verfahren zur Installation einer Richtlinie zur Ausführung einer Betriebsumgebung für ein Kommunikationsendgerät (UE) in einem Mobilfunknetz eines Betreibers (Op1), wobei die Umgebung (P1) als Betreiberprofil bezeichnet wird, wobei das Betreiberprofil in einem in dem Endgerät eingebetteten Teilnehmermodul (eSIM) gespeichert ist, wobei das Verfahren die folgenden Schritte beinhaltet, die durch das Teilnehmermodul umgesetzt werden:
• Erhalten (U4) eines ersten Tokens (tokOp1) von dem Betreiber, wobei das erste Token eine Information zur Identifikation der Richtlinie und eine Signatur des Betreibers beinhaltet;
• Erhalten (U3) eines zweiten Tokens (tokDM) von dem Betreiber, wobei das zweite Token ein erstes Mittel zur Verifizierung der Authentizität des ersten Tokens und eine Signatur eines Dritten (DM; CM), der nicht der Betreiber ist, beinhaltet;
• Verifizieren (U5) der Authentizität des ersten Tokens mit Hilfe des ersten Verifizierungsmittels;
• Verifizieren (U5) der Authentizität des zweiten Tokens mit Hilfe eines zweiten Verifizierungsmittels, das durch den Dritten in dem Teilnehmermodul vorinstalliert ist;
• Installieren (U6) der Richtlinie in dem Teilnehmermodul, wenn die Authentizitäten des ersten und des zweiten Tokens verifiziert sind.

2. Verfahren nach Anspruch 1, wobei das zweite Verifizierungsmittel durch den Dritten (DM; CM) vor mindestens einem der Schritte (U3; U4) des Erhaltens der Tokens (tokDM; tokOp1) installiert wird.

3. Verfahren nach einem der Ansprüche 1 oder 2, wobei der Dritte, der nicht der Betreiber (Op1) ist, ein Hersteller (DM) des Endgeräts (UE) ist.

4. Verfahren nach einem der Ansprüche 1 oder 2, wobei der Dritte, der nicht der Betreiber (Op1) ist, ein Hersteller (CM) des Teilnehmermoduls (eSIM) des Endgeräts (UE) ist.

5. Verfahren nach einem der vorhergehenden Ansprüche, wobei mindestens ein Token (tokDM; tokOp1) ferner Informationen über Grenzen bei der Anwendung der Richtlinie auf das Betreiberprofil (P1) beinhaltet.

6. Verfahren nach einem der vorhergehenden Ansprüche, wobei das erste Verifizierungsmittel ein Kondensat ist, das sich aus einer Hash-Funktion ergibt, die auf einen Schlüssel angewendet wird, der dem Betreiber (Op1) entspricht.

7. Vorrichtung zur Installation einer Richtlinie zur Ausführung einer Betriebsumgebung für ein Kommunikationsendgerät (UE) in einem Mobilfunknetz eines Betreibers (Op1), wobei die Umgebung (P1) als Betreiberprofil bezeichnet wird, wobei das Betreiberprofil in einem in dem Endgerät eingebetteten Teilnehmermodul (eSIM) gespeichert ist, wobei die Vorrichtung die folgenden Module beinhaltet:
• ein Modul zum Erhalten (ISD-R) von zwei Tokens von dem Betreiber, wobei ein erstes Token (tokOp1) eine Information zur Identifikation der Richtlinie und eine Signatur des Betreibers beinhaltet, wobei ein zweites Token (tokDM) ein erstes Mittel zur Verifizierung der Authentizität des ersten Tokens und eine Signatur eines Dritten (DM; CM), der nicht der Betreiber ist, beinhaltet;
• ein Modul zum Verifizieren (polEnf) der Authentizität des ersten Tokens mit Hilfe des ersten Verifizierungsmittels und der Authentizität des zweiten Tokens mit Hilfe eines zweiten Verifizierungsmittels, das durch den Dritten in dem Teilnehmermodul vorinstalliert ist;
• ein Modul zur Installation (polEnf) der Richtlinie in dem Teilnehmermodul, wenn die Authentizitäten des ersten und des zweiten Tokens verifiziert sind.

8. Teilnehmermodul eines Kommunikationsendgeräts (UE) in einem Mobilfunknetz eines Betreibers (Op1), das mindestens ein Betreiberprofilmodul (ISD-P) und eine Vorrichtung nach Anspruch 7 beinhaltet.

9. Kommunikationsendgerät (UE) in einem Mobilfunknetz eines Betreibers (Op1), das ein Teilnehmermodul (eSIM) nach Anspruch 8 beinhaltet.

10. Computerprogramm, **dadurch gekennzeichnet, dass** es Anweisungen zur Umsetzung der Schritte des Verfahrens zur Installation einer Richtlinie nach Anspruch 1 beinhaltet, wenn dieses Programm von einem Prozessor ausgeführt wird.

11. Von einem Teilnehmermodul lesbares Aufzeichnungsmedium, auf dem das Programm nach Anspruch 10 aufgezeichnet ist.

## Claims

1. Method for installing a rule for executing an operating environment for a communication terminal (UE) in a mobile network of an operator (Op1), said environment (P1) being called operator profile, the operator profile being stored in a subscriber module (eSIM) embedded in the terminal, the method comprising the following steps implemented by the subscriber module:
• obtaining (U4) a first token (tokOp1) from the operator, the first token comprising an item of information relating to the identification of the rule and a signature of the operator;
• obtaining (U3) a second token (tokDM) from the operator, the second token comprising a first verification means for verifying the authenticity of the first token and a signature of a third party (DM; CM) other than the operator;
• verifying (U5) the authenticity of the first token by way of the first verification means;
• verifying (U5) the authenticity of the second token by way of a second verification means pre-installed in the subscriber module by the third party;
• installing (U6) the rule in the subscriber module if the authenticities of the first and second tokens are verified.

2. Method according to Claim 1, wherein the second verification means is installed by the third party (DM; CM), prior to at least one of the steps (U3; U4) of obtaining the tokens (tokDM; tokOp1).

3. Method according to either of Claims 1 and 2, wherein the third party other than the operator (Op1) is a manufacturer (DM) of the terminal (UE).

4. Method according to either of Claims 1 and 2, wherein the third party other than the operator (Op1) is a manufacturer (CM) of the subscriber module (eSIM) of the terminal (UE).

5. Method according to one of the preceding claims, wherein at least one token (tokDM; tokOp1) furthermore comprises information relating to limits in terms of the application of the rule to the operator profile (P1).

6. Method according to one of the preceding claims, wherein the first verification means is a hash resulting from a hash function applied to a key corresponding to the operator (Op1).

7. Device for installing a rule for executing an operating environment for a communication terminal (UE) in a mobile network of an operator (Op1), said environment (P1) being called operator profile, the operator profile being stored in a subscriber module (eSIM) embedded in the terminal, the device comprising the following modules:
• a module (ISD-R) for obtaining two tokens from the operator, a first token (tokOp1) comprising an item of information relating to the identification of the rule and a signature of the operator, a second token (tokDM) comprising a first verification means for verifying the authenticity of the first token and a signature of a third party (DM; CM) other than the operator;
• a module (polEnf) for verifying the authenticity of the first token by way of the first verification means, and the authenticity of the second token by way of a second verification means pre-installed in the subscriber module by the third party;
• a module (polEnf) for installing the rule in the subscriber module if the authenticities of the first and second tokens are verified.

8. Subscriber module of a communication terminal (UE) in a mobile network of an operator (Op1), comprising at least one operator profile module (ISD-P) and a device according to Claim 7.

9. Communication terminal (UE) in a mobile network of an operator (Op1), comprising a subscriber module (eSIM) according to Claim 8.

10. Computer program, **characterized in that** it comprises instructions for implementing the steps of the method for installing a rule according to Claim 1 when this program is executed by a processor.

11. Recording medium able to be read by a subscriber module and on which the program according to Claim 10 is recorded.
